Europäisches Patentamt

European Patent Office

Office européen des brevets

(11) Publication number: **0 078 160**
**B1**

(12) **EUROPEAN PATENT SPECIFICATION**

(45) Date of publication of patent specification: **22.05.85**    (51) Int. Cl.⁴: **B 29 C 63/02**

(21) Application number: **82305615.5**

(22) Date of filing: **21.10.82**

(54) Method and apparatus for coating recoverable sheets.

(30) Priority: **23.10.81 GB 8132059**

(43) Date of publication of application:
**04.05.83 Bulletin 83/18**

(45) Publication of the grant of the patent:
**22.05.85 Bulletin 85/21**

(84) Designated Contracting States:
**AT BE CH DE FR IT LI NL SE**

(56) References cited:
**EP-A-0 045 213**
**DE-A-2 505 979**
**DE-A-2 600 647**
**DE-A-2 702 241**
**DE-A-2 938 270**
**GB-A-1 440 524**
**US-A-2 027 962**
**US-A-2 648 097**
**US-A-3 086 242**
**US-A-3 379 218**
**US-A-3 597 372**
**US-A-4 061 527**

(73) Proprietor: **N.V. RAYCHEM S.A.**
**Diestsesteenweg 692**
**B-3200 Kessel-lo (BE)**

(72) Inventor: **Wille, Marc**
**Eekhoornlaan 23**
**B-3128 Baal (BE)**

(74) Representative: **Benson, John Everett et al**
**Raychem Limited Intellectual Property Law**
**Department Swan House 37-39, High Holborn**
**London WC1 (GB)**

Courier Press, Leamington Spa, England.

## Description

This invention relates to a method and apparatus for coating recoverable sheets.

Recoverable sheets of materials such as, for example, cross-linked polyethylene, are well known, for example from U.S. Patents 2027962, 3086242, 3597372 and British Patent 1440524, and are used in applications such as splicing of cables where a heat or otherwise recoverable sheet may conveniently be wrapped around the splice and recovered to protect it against the environment. A known wraparound type of heat recoverable sheet is provided with closure means such as raised ridges or rails which are held together by means such as a metal channel, as described for example in British Patent Specification No. 1,155,470. Wraparound sheets of this kind are clearly convenient to use where the cable splice does not permit sliding of a closed circular sleeve thereover.

Known wraparound sheets or sleeves may be produced by moulding or continuous extrusion with the closure rails formed integrally with the sheet by expansion to the heat recoverable state by stretching at an elevated temperature, preferably above the crystalline melting point of the polymer in question.

The sheet is normally then coated with a fluid sealant, e.g. a hot melt adhesive, which may be spread onto the sheet by means such as extrusion or hopper coating, in order to provide the surface which will be inside the splice enclosure in use with a sealant to help exclude moisture and other environmental contamination.

Coating with a fluid sealant can be difficult to perform with precision and without waste. We have discovered a way of overcoming these problems by using a solid sealant.

The present invention therefore provides a method of sealant coating a heat-recoverable polymer sheet, comprising heating the sheet to an elevated temperature, preferably to a temperature at or above the crystalline melting point of the polymer, applying a solid sheet of heat activatable sealant preferably a hot melt adhesive or a mastic, to the heated polymer sheet while the polymer sheet is at a temperature capable of activating the sealant so as to adhere it to the polymer sheet.

The invention also consists in an apparatus for sealant-coating a heat-recoverable polymer sheet with a solid sheet of heat-activatable sealant, which comprises: a) a support for the polymer sheet, having a gripping system which can hold the polymer sheet in a substantially even configuration on the support; b) a heating zone which can heat the polymer sheet to a temperature sufficient for the sealant to be activated on contact with the polymer sheet; c) a flame brushing zone; and d) a roller for pressing the sheet of sealant onto the surface of the heated polymer sheet; the apparatus being so arranged that the support can pass sequentially through the heating zone, the brushing zone, and past the roller.

The invention is thus well adapted, although not restricted, to coating individual pieces of heat-recoverable sheet, and the invention advantageously alleviates adhesive coating problems such as messiness and inaccurate positioning of the adhesive coat, which can arise if traditional hot melt coating methods are used. The invention has the further advantages that because the solid sheet of sealant is pre-formed, more uniform coating thickness can be attained and coating right up to the edges of the polymer sheet can be conveniently achieved.

The sealant sheet is preferably applied by means of a roller, which may conveniently be arranged to move across the polymer sheet while the latter is held stationary, so that the leading edge of the sealant sheet is wrapped around the roller and contacts the hot stretched polymer sheet moving substantially counter-current to the trailing portion of the sealant sheet. It is preferred to construct the roller with releasable means for holding the sealant sheet thereon, which means are used to hold the leading portion of the sheet prior to contact with the polymer sheet. The holding means for the roller is preferably released upon proper contact of the leading edge of the sealant sheet with the polymer sheet, so as to prevent the sealant sheet from wrapping too far around the roller, while nevertheless ensuring adequate contact of the leading edge with the polymer sheet. The preferred holding means for the sealant sheet is vacuum operated and preferably comprises one or more holes in the roller through which the vacuum applied to the interior of a hollow roller can hold the sheet thereto. Since the alignment of a row of such holes on the roller can be predetermined, means can be provided automatically to discharge the vacuum, thus releasing the leading edge of the adhesive sheet, when the roller reaches the position to establish initial contact of the leading edge of the sealant sheet with the hot polymer sheet. The roller is preferably provided with a resilient surface, such as a wrapping of foamed polymeric material, so as to take up any irregularities in the stretched, hot polymer sheet, such irregularities normally occurring along the line of the aforementioned closure rails, which are on the opposite surface of the sheet from the sealant coating.

In wraparound sheets having the aforementioned rail-and-channel type of closure, it is desirable to maintain a region of relatively unexpanded polymer sheet material close to the rails. This tends to minimise distortion of the rails during subsequent recovery of the sheet, and can advantageously be achieved by gripping the rails in metal jaws of suitable gripping means, which touch the sheet near the base of the rails. This keeps the rails and immediately adjacent sheet areas relatively cool during the heating of the sheet, and the cooler polymer is less susceptible to distortion. Where the polymer sheet does not have such rails, simpler designs of gripping means will generally be sufficient.

The heater used to heat the polymer sheet is preferably electric and preferably extends over the full surface area of the polymer sheet. Suitable electric heating may be provided by an array of lamps, arranged for example in individually controllable rows. Such control can allow the various parts of the sheet (web, flap and rails for example) each to be heated to the optimum extent. The heating step can also be used to effect chemical cross-linking of the polymer sheet if desired, although radiation cross-linking is preferred for most purposes.

After the heating it is preferred to flame brush the surface of the sheet to be coated, so as to enhance the adhesion of the hot melt adhesive or other sealant. It is also preferred to reheat the sealant coated sheet to a temperature which softens or anneals the sealant so as to reduce the occurrence of entrapped air bubbles and further improve adhesion and appearance in the final product.

Apparatus for carrying out the method according to the invention may be devised in various ways by suitably skilled persons, and will comprise means for holding, heating, and optionally flame brushing the sheet, together with the necessary sealant sheet application means, e.g. a coating roller, preferably having a resilient surface such as foamed polymer, and optionally means for re-heating the sealant-coated sheet and for cooling it. Where the polymer sheet has rails in order that it may later be closed around, for example a splice in a cable, it may be desirable that the means for holding the sheet has special provision for accommodating the rails without damaging them. The necessary movement of the polymer sheet between the heating, flame brushing, adhesive coating, and cooling stations may be achieved by movement of the sheet holder between the relevant pieces of apparatus, or by movement of all or part of the apparatus with the sheet holder fixed. Preferably, the sheet holder moves sequentially under a heater, under the flame brush, to the sealant coating roll which then moves across the stationary polymer sheet, back to the heater for re-heating, and then to a cooling area. Compressed air or other means may be used to facilitate cooling of the finished sheet, thus increasing throughput. Preferably, cooling is effected progressively from the free edges of the sheet inwards towards the centre. Suitable means for moving the sheet holder and coating roll in this way may readily be selected by skilled persons, long screw-threaded shafts with suitable rotational drive means being one possibility. The means for releasing the adhesive holding means on the roller on contact of the leading edge of the adhesive with the hot polymer sheet may also be devised according to convenience provided that it brings about adequate contact of the leading edge with the hot sheet and prevents undesirable wrapping of the sealant sheet around the coating roller beyond the point of contact with the hot sheet.

The invention will be more fully understood by reference to the accompanying drawings, which are provided by way of Example, wherein:

Figs. 1 to 6 show schematically various stages of the method according to this invention;

Fig. 7 shows a cross-section of the preferred adhesive coating roller;

Fig. 8 is a diagrammatic plan showing a preferred layout of the apparatus of the invention;

Fig. 9 shows in more detail a single trolley used in the apparatus of Fig. 8;

Fig. 10 is a rail gripping system, in the open position, as used in the trolley of Fig. 9;

Fig. 11 shows in cross-section a web grabbing system taken in the direction A—A of Fig. 9; and

Figs. 12—14 show an alternative type of rail gripping system.

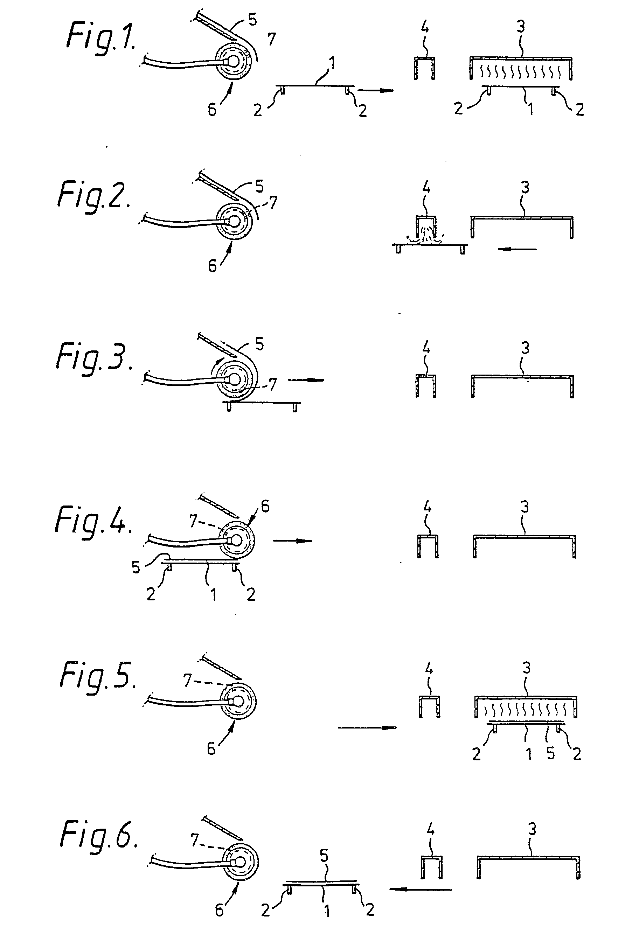

Referring to the drawings, Fig. 2 shows a heat-recoverable sheet 1 having closure rails 2, moving from a starting position to a position underneath the heater 3, where the sheet is heated to a temperature above the crystalline melting point of the polymer.

The heated sheet then passes back from the heater 3 under the flame brush 4, which flame brushes the sheet surface in preparation for application of the sealant.

Fig. 3 shows the hot flame brushed sheet in position where initial contact of the leading edge of solid sealant sheet 5 is established, at which time the vacuum applied to the hollow coating roll 6 is removed so as to release the leading edge of the sealant sheet from the row of holes 7 through which the vacuum acts to secure the leading edge of the sealant to the roller.

The hot polymer sheet is now stationary, while the coating roll moves as shown in Figs. 3 and 4 until all of the solid sealant sheet has been pressed against the polymer sheet surface and is sufficiently activated by the temperature of the sheet to adhere thereto.

The polymer sheet coated with sealant then returns to the heater 3 as shown in Fig. 5 for reheating to anneal the sealant coating, thus reducing air entrapment and improving the adhesion and appearance of the sealant coating.

The final step is for the coated and annealed sheet to return to the starting position, where it is cooled and removed from the holder.

Apparatus of this kind lends itself fairly well to automation, and simple trial and error can soon establish suitable heating times and temperatures for a given product.

These values will depend on the expansion ratios to which the material has been stretched, since greater care is necessary at higher temperatures for high expansion ratios to avoid splitting the sheet.

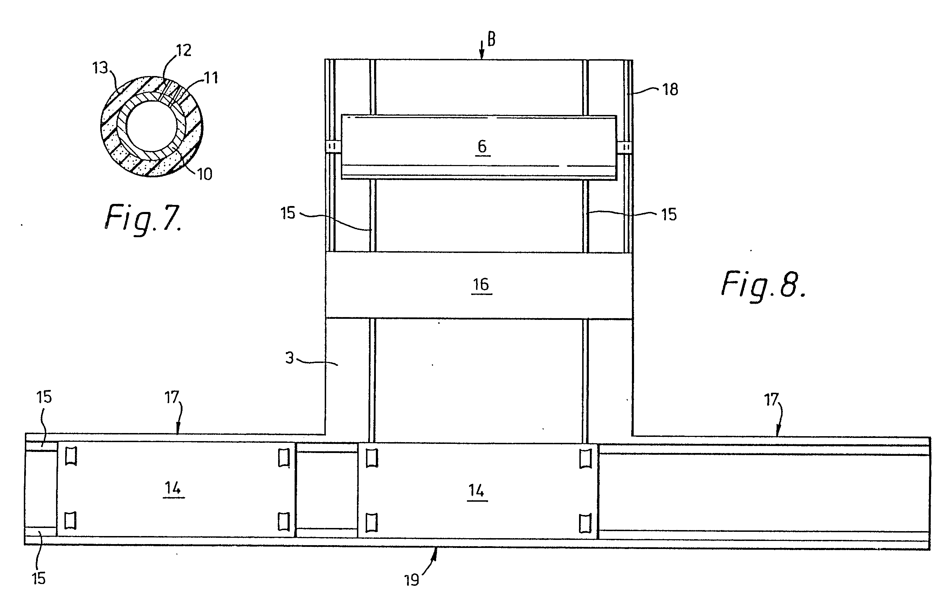

As shown in endwise cross-section in Fig. 7, the preferred adhesive coating roller is a hollow metal roll 10 having a row of holes 11 across its width which correspond to holes 12 in a foam layer 13 carried on the surface of the roll for the aforementioned purposes. Suitable foams can readily be chosen, and could be applied to the metal roll as a single piece, or as a wrapped spiral, or in any other manner which would suit the present purposes.

The sealant sheet is preferably applied to the polymer sheet while the latter is at a temperature above the crystalline melting point of the polymer.

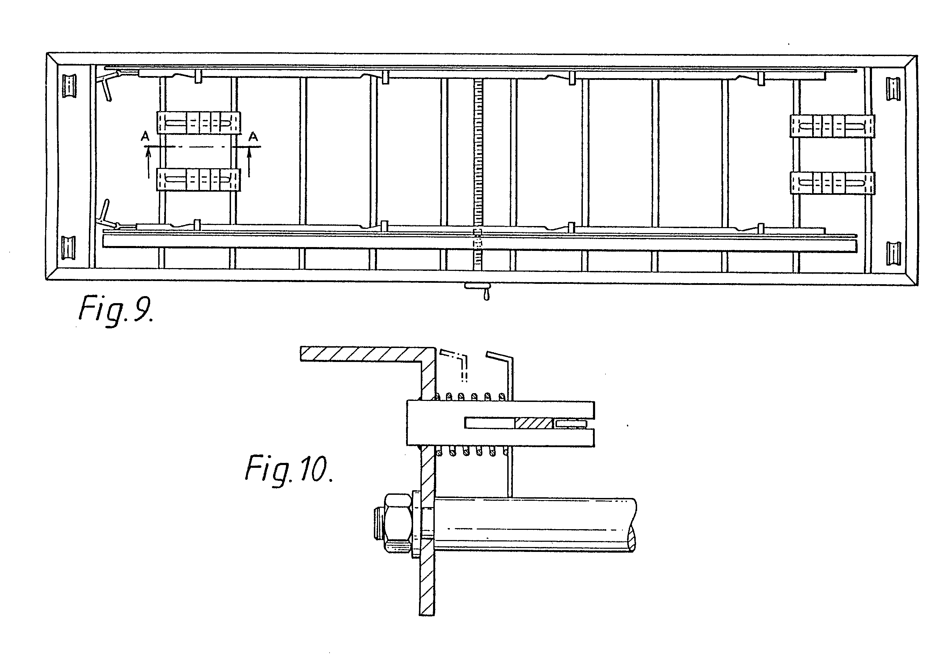

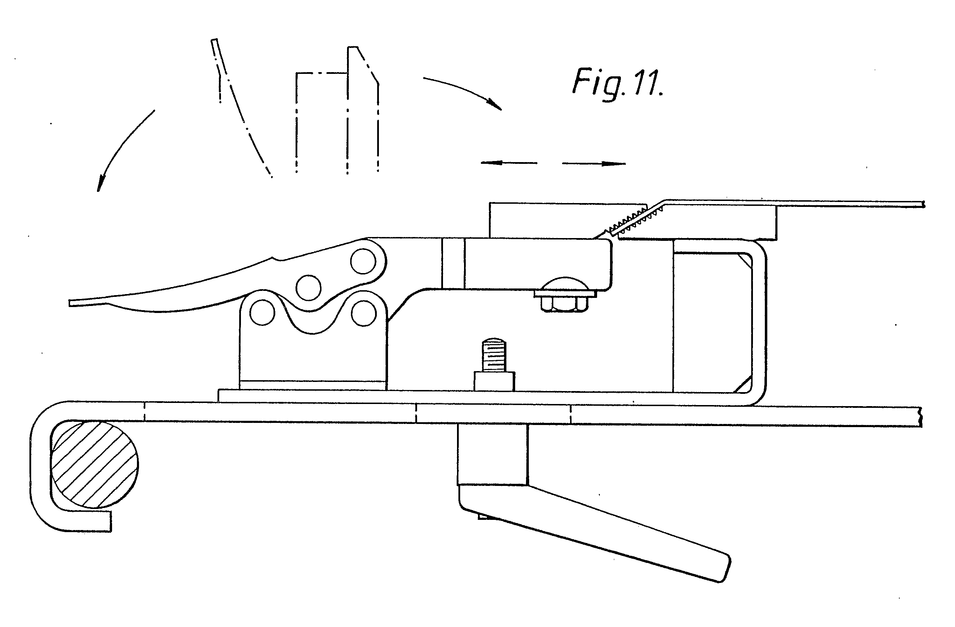

Fig. 8 is a diagrammatic plan of a preferred apparatus of the invention. The figure not only shows a preferred physical layout of the apparatus, but also shows the logistics of the method. The apparatus consists basically of trolleys 14 for carrying the polymer sheet before and after cooling, and rails 15 which allow the trolleys to be moved in two mutually perpendicular directions arranged as a "T". In one of these two directions (the cross-bar of the "T") there are a first cooling zone 17, a loading zone 19, and a second cooling zone 17. The loading zone 19 leads down the perpendicular of the "T", to a heating zone 3, via treatment zone 16 (such as a flame brushing zone), to a coating roller 6. The zones 3 and 16 and the roller 6 will conveniently be mounted in a superstructure above the level of the rails and trolleys. The sheet of sealant with which the polymer sheet is to be coated is loaded at position B onto the roller 6. The roller may be hollow and have vacuum ducts as described above to cause the sealant sheet to follow its circumference as it is rotated. The roller may move along rails 18 as it rotates, or alternatively its axis may remain stationary while the trolley moves underneath it. In either way the intention is that the sealant sheet is evenly pressed over the surface of the polymer sheet, and caused to adhere thereto. The design of the trolleys is not critical, but it is preferred that they have a separate frame for gripping the polymer sheets: a preferred trolley is illustrated in Fig. 9. Such a frame will, in general, have opposing rail gripping means, as illustrated in Fig. 10, which maintain the sheet under the correct transverse tension. Transverse tension may, however, cause scalloping in the ends of the polymer sheet. In order to preserve the sheets generally rectangular shape during the heating and coating, web gripping means may therefore be provided. In Fig. 9 two web gripping means are provided at each end of the polymer sheet, and a cross-section of a single web gripping assembly taken in the direction A—A of Fig. 9 is shown in Fig. 11. The absolute sizes of the apparatus, the trolleys and the gripping means will clearly depend on the size of polymer sheets to be coated, and therefore, for example on what type of splice is to be covered by the finished product. As a guide, however, the gripping means shown in Figs. 10 and 11 can be regarded as about life-size for many applications, the trolley of Fig. 9 about 1:16 scale, and the overall layout of Fig. 8 about 1:40 scale.

The general sequence of events will be as follows: a polymer sheet is loaded and fixed onto a trolley in one of the positions 17; the trolley is moved to position 19 and then to the heating zone 3, the trolley then passes through the flame brushing zone 16 to the roller 6; at the roller, a sheet of sealant is fed into the apparatus, and as the roller rotates the sealant is pressed onto the hot polymer sheet, to which it adheres; the trolley containing the coated polymer sheet then passes back to a position 17. When it is allowed to cool; the sequence is then repeated using a trolley from the vacant position 17.

Other finishing operations can be carried out as desired, e.g. trimming, cutting to specific sizes, and coating with thermochromic indicator paints.

An embodiment of gripping jaws that can be used to secure the sheet to the trolley is illustrated by way of Example in Figs. 10—14 as applied to the kind of wraparound closure known from British Patent No. 1155470.

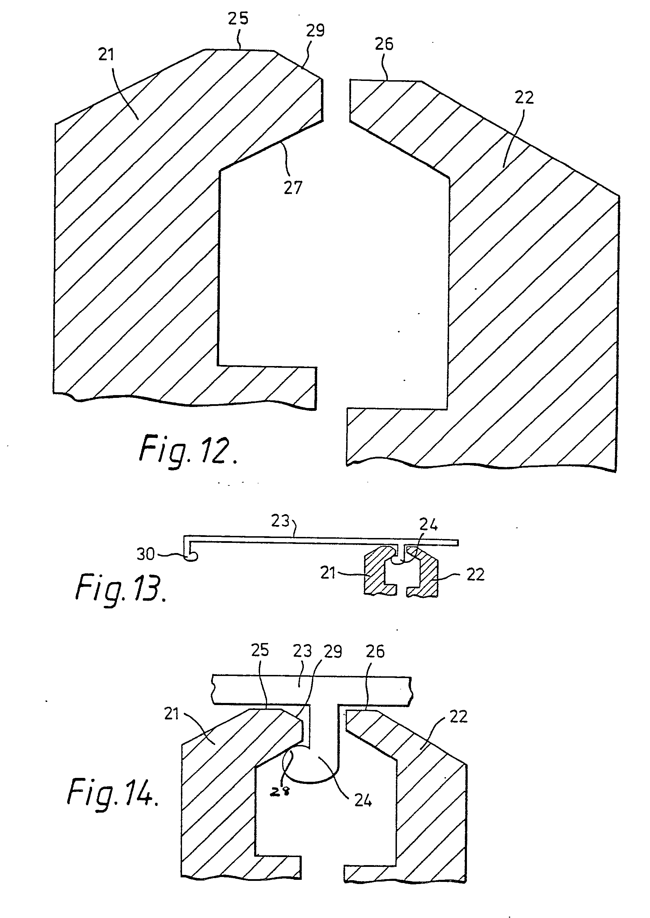

In Figs. 12—14, the jaws 21, 22 are shaped to give the desired support (and heat sink) to the sheet 23 near the foot of the rail 24 by means of flat surfaces 25 and 26; the jaws being designed to ensure that this contact between the sheet 23 and the support surfaces 25, 26 is properly established. This supporting contact plays a major part of preventing unacceptable deformation of the rails that might otherwise occur.

The correct contact of the jaws with the polymer sheet can be ensured by the inclined surface 27 on the jaw 21 which presses on the projecting knob or lip 28 of the closure rail 24 (see Fig. 14) in such a way as to pull the rail downwards (as illustrated) when the jaws 21, 22 are tightened thereon. The size and slope of the jaws 21 are selected to suit the rail in question, and it should be noted that the two rails of some wraparound closures are of different heights to allow for the overlap of the sheet ends in use. Thus two pairs of gripping jaws of slightly different dimensions are preferably used as exemplified by the different dimensions of the illustrated jaws 21 and 22. The jaw 21 preferably has an upper (as shown) sloping surface 29 to facilitate the wedge-like fit into the rail, while the complementary jaw 22 is square cornered to give full support to the opposite side of the rail. The parts are not shown to scale. The area of the contact portions 25, 26 is selected to produce the desired substantially unexpanded area of sheet at the foot of the rail, and it is advisable to shield the outermost jaw at the rail 30 at the extreme edge of the sheet (as shown on the left in Fig. 13) in order to prevent overheating of the rail by heat transfer through the exposed one of the pair of jaws (not shown) holding that rail. A water-cooled plate is preferred for this cooling, but any effective heat shield may be used. It will be observed that only one of the jaws holding that rail 30 can contact and support the adjacent sheet material, but the principle is similar to that described above for the other rail 24. This procedure and apparatus are advantageous over simple edge clamping of the sheet since waste due to clamp marks is eliminated and the desired substantially unexpanded regions of sheet near the rail can conveniently be maintained.

## Claims

1. A method of sealant-coating a heat-recoverable polymer sheet (1), comprising heating the sheet to an elevated temperature, and applying a solid sheet (5) of heat-activatable sealant to the heated polymer sheet (1) while this polymer sheet is at a temperature capable of activating the sealant so as to adhere it to the polymer sheet.

2. A method according to Claim 1, wherein individual heat-recoverable polymer sheets (1) are individually sealant coated.

3. A method according to Claim 1 or 2, wherein the sheet of sealant (5) is applied by means of a roller (6).

4. A method according to Claim 3, wherein the roller (6) moves across the surface of the stationary polymer sheet (1) to effect the coating.

5. A method according to Claim 3 or 4, wherein the leading edge of the sheet of sealant (5) is wrapped around the roller (6) so that the trailing portion thereof and the portion thereof in contact with the polymer sheet (1) move substantially countercurrent to each other during the application of the sheet of sealant (5) to the polymer sheet (1).

6. A method according to Claim 3, 4 or 5, wherein the roller (6) has releasable means for holding the sheet of sealant (5) thereto, and at least the leading portion of the sheet of sealant is held thereby prior to contact with the polymer sheet.

7. A method according to Claim 6, wherein the holding means is released upon contact of the leading edge of the sheet of sealant (5) with the polymer sheet.

8. A method according to Claim 6 or 7, wherein the holding means is vacuum operated.

9. A method according to Claim 8, wherein the holding means comprises one or more holes (7, 12) in the roller (6) whereby vacuum is applied to hold the sheet of sealant (5).

10. A method according to any of Claims 3 to 9, wherein the roller (6) has a resilient surface.

11. A method according to Claim 10, wherein the resilient surface is provided by a layer of foamed polymeric material (13) on the surface of the roller (6).

12. A method according to any of the preceding Claims, wherein the polymer sheet (1) is flame brushed before application of the sheet of sealant (5) thereto.

13. A method according to any of the preceding Claims, wherein the sealant-coated polymer sheet is re-heated after the application of the sealant.

14. A method according to any of the preceding Claims, wherein the polymer sheet (1) is moved on a polymer sheet holder (14) to bring it sequentially under at least two of: means for carrying out heating (3), flame brushing (4), re-heating, and cooling.

15. A method according to any of the preceding Claims, wherein the polymer sheet (1) has substantially parallel regions at or near opposed edges thereof and is held during the heating and application by gripping means which grip said regions.

16. A method according to any of the preceding Claims, which additionally comprises cooling the coated polymer sheet progressively from its edges towards its centre.

17. A method according to any of the preceding Claims, wherein the coating is carried out with the polymer sheet temperature above the crystalline melting point of the polymer.

18. A method according to any of the preceding Claims, wherein the heat-activatable sealant is a hot-melt adhesive, or a mastic which is substantially solid before the heating.

19. Apparatus for sealant-coating a heat-recoverable polymer sheet (1), comprising means for holding (14) and means for heating (3) the sheet, and means (6) for applying a solid sheet of heat-activatable sealant (5) thereto when the polymer sheet (1) has been heated by the means for heating to a temperature capable of activating the sealant so as to adhere it to the polymer sheet.

20. Apparatus according to Claim 19, in which the means for applying comprises a roller (6), for pressing the sheet of sealant (5) against the surface of the polymer sheet (1).

21. Apparatus according to Claim 20, wherein the roller (6) is provided with releasable means for holding the sheet of sealant thereto.

22. Apparatus according to Claim 21, wherein the means for holding is vacuum operated.

23. Apparatus according to Claim 22, wherein the means for holding comprises at least one hole (7, 12) in the surface of the roller (6) whereby a vacuum may be applied to hold the sheet of sealant to the roller (1).

24. Apparatus according to Claim 21, 22 or 23, including means for automatically releasing the holding means to release the sheet of sealant (5) from the roller (6) upon contact of the sheet of sealant with the hot polymer sheet (1).

25. Apparatus according to any of Claims 19 to 25, which includes means for flame brushing the polymer sheet (1) before application of the sheet of sealant thereto and/or means for reheating the sealant-coated sheet.

26. Apparatus according to any of Claims 19 to 25 wherein the polymer sheet (1) has substantially parallel regions at or near opposed edges thereof, and the means for holding comprises gripping means which grip said regions.

27. Apparatus according to Claim 26, which additionally comprises a pair of second gripping means which acts in a direction substantially perpendicular to that of the first-mentioned gripping means, and which prevents or reduces scalloping which may result from tension in the polymer sheet across the first-mentioned gripping means.

28. Apparatus for sealant-coating a heat-recoverable polymer sheet (1) with a solid sheet of heat-activatable sealant (5), which comprises:

(a) a support (14) for the polymer sheet (1), having a gripping system which can hold the polymer sheet in a substantially even configuration on the support;

(b) a heating zone (3) which can heat the polymer sheet (1) to a temperature sufficient for the sealant to be activated on contact with the polymer sheet;

(c) a flame brushing zone (4); and

(d) a roller (6) for pressing the sheet of sealant (5), onto the surface of the heated polymer sheet (1);

the apparatus being so arranged that the support (14) can pass sequentially through the heating zone (3), the brushing zone (4), and past the roller (6).

29. Apparatus according to Claim 28, in which the gripping system comprises first gripping means which can hold the polymer sheet substantially even in one direction, and second gripping means which can prevent scalloping at opposed ends of the sheet that may result from tension in the sheet in said one direction.

**Patentansprüche**

1. Verfahren zum Dichtungsmittelbeschichten einer wärmeerholbaren Polymerfolie (1), dadurch gekennzeichnet, daß die Folie auf eine erhöhte Temperatur erwärmt und eine massive Folie (5) aus wärmeaktivierbarem Dichtungsmittel auf die erwärmte Polymerfolie (1) aufgebracht wird, währenddem diese polymere Folie auf einer Temperatur ist, die die Aktivierung des Dichtungsmittels ermöglicht, so daß es an der Polymerfolie haftet.

2. Verfahren nach Anspruch 1, dadurch gekennzeichnet, daß individuelle wärmeerholbare Polymerfolien (1) individuell mit Dichtungsmittel beschichtet werden.

3. Verfahren nach Anspruch 1 oder 2, dadurch gekennzeichnet, daß die Folie (5) aus Dichtungsmittel mit Hilfe einer Walze (6) aufgebracht wird.

4. Verfahren nach Anspruch 3, dadurch gekennzeichnet, daß die Walze (6) sich über die Oberfläche der stationären Polymerfolie (1) bewegt, um die Beschichtung zu bewirken.

5. Verfahren nach Anspruch 3 oder 4, dadurch gekennzeichnet, daß der vorauslaufende Rand der Folie (5) aus Dichtungsmittel um die Walze (6) gewickelt wird, so daß der nachlaufende Teil derselben und der in Kontakt mit der Polymerfolie (1) sich befindende Teil sich etwa gegenläufig zueinander während der Aufbringung der Folie (5) aus Dichtungsmittel auf die Polymerfolie (1) bewegen.

6. Verfahren nach Anspruch 3, 4 oder 5, dadurch gekennzeichnet, daß die Walze (6) lösbare Einrichtungen zum Halten der Folie (5) aus Dichtungsmittel hat, und daß wenigstens der vorauslaufende Teil der Folie aus Dichtungsmittel hierdurch vor dem Kontakt mit der Polymerfolie gehalten wird.

7. Verfahren nach Anspruch 6, dadurch gekennzeichnet, daß die Halteeinrichtung beim Kontakt des vorauslaufenden Randes der Folie (5) aus Dichtungsmittel mit der Polymerfolie freigegeben wird.

8. Verfahren nach Anspruch 6 oder 7, dadurch gekennzeichnet, daß die Halteeinrichtung vakuumbetrieben ist.

9. Verfahren nach Anspruch 8, dadurch gekennzeichnet, daß die Halteeinrichtung eine oder mehrere Öffnungen (7, 12) in der Walze (6) aufweist, wobei das Vakuum angelegt wird, um die Folie (5) aus Dichtungsmittel zu halten.

10. Verfahren nach einem der Ansprüche 3 bis 9, dadurch gekennzeichnet, daß die Walze (6) eine federnd nachgiebige Oberfläche hat.

11. Verfahren nach Anspruch 10, dadurch gekennzeichnet, daß die federnd nachgiebige Oberfläche von einer Schicht aus polymerem Schaummaterial (13) auf der Oberfläche der Walze (6) gebildet wird.

12. Verfahren nach einem der vorhergehenden Ansprüche, dadurch gekennzeichnet, daß die Polymerfolie (1) vor dem Aufbringen der Folie (5) aus Dichtungsmittel auf derselben flammgebürstet wird.

13. Verfahren nach einem der vorhergehenden Ansprüche, dadurch gekennzeichnet, daß die mit Dichtungsmittel beschichtete Polymerfolie nach dem Aufbringen des Dichtungsmittels nochmals erwärmt wird.

14. Verfahren nach einem der vorhergehenden Ansprüche, dadurch gekennzeichnet, daß die Polymerfolie (1) auf einem Polymerfolienhalter (14) bewegt wird, um sie sequentiell unter wenigstens zwei von folgenden Einrichtungen zu bringen: Einrichtung (3) zum Durchführen der Erwärmung, Flammbürsteinrichtung (4), Wiedererwärmungseinrichtung und Kühlungseinrichtung.

15. Verfahren nach einem der vorangehenden Ansprüche, dadurch gekennzeichnet, daß die Polymerfolie (1) im wesentlichen parallele Bereiche an oder in der Nähe der gegenüberliegenden Ränder hat und daß sie während der Erwärmung und der Beschichtung durch Greifeinrichtungen gehalten wird, die diese Bereiche ergreifen.

16. Verfahren nach einem der vorangehenden Ansprüche, dadurch gekennzeichnet, daß zusätzlich die beschichtete Polymerfolie progressiv ausgehend von ihren Rändern in Richtung zur Mitte gekühlt wird.

17. Verfahren nach einem der vorhergehenden Ansprüche, dadurch gekennzeichnet, daß die Beschichtung so ausgeführt wird, daß die Polymerfolie eine Temperatur oberhalb des Kristallschmelzpunktes des Polymeren hat.

18. Verfahren nach einem der vorhergehenden Ansprüche, dadurch gekennzeichnet, daß das wärmeaktivierbare Dichtungsmittel ein heißschmelzender Kleber oder ein Mastix ist, die im wesentlichen feststofförmig vor der Erwärmung sind.

19. Vorrichtung zum Dichtungsmittelbeschichten einer wärmeerholbaren Polymerfolie (1), gekennzeichnet durch eine Einrichtung (14) zum Halten der Folie, eine Einrichtung (3) zum Erwärmen der Folie, und eine Einrichtung (6) zum Aufbringen einer massiven Folie (5) aus wärmeaktivierbarem Dichtungsmittel auf dieselbe, wenn die Polymerfolie (1) durch die Erwärmungseinrichtung auf eine Temperatur erwärmt worden ist, bei der das Dichtungsmittel aktivierbar ist, so daß es haftend mit der Polymerfolie verbunden ist.

20. Vorrichtung nach Anspruch 19, dadurch gekennzeichnet, daß die Aufbringungseinrichtung eine Walze (6) zum Anpressen der Folie (5) aus Dichtungsmittel gegen die Oberfläche der Polymerfolie (1) aufweist.

21. Vorrichtung nach Anspruch 20, dadurch gekennzeichnet, daß die Walze (6) mit einer lösbaren Einrichtung zum Halten der Folie aus Dichtungsmittel an derselben versehen ist.

22. Vorrichtung nach Anspruch 21, dadurch gekennzeichnet, daß die Einrichtung zum Halten vakuumbetätigt ist.

23. Vorrichtung nach Anspruch 22, dadurch gekennzeichnet, daß die Einrichtung zum Halten wenigstens eine Öffnung (7, 12) an der Oberfläche der Walze (6) aufweist, wobei ein Vakuum angelegt werden kann, um die Folie (5) aus Dichtungsmittel an der Walze (6) zu halten.

24. Vorrichtung nach einem der Ansprüche 21, 22 oder 23, dadurch gekennzeichnet, daß sie eine Einrichtung zum automatischen Freigeben der Halteeinrichtung enthält, um die Folie (5) aus Dichtungsmittel von der Walze (6) beim Kontakt der Folie aus Dichtungsmittel mit der heißen Polymerfolie (1) zu lösen.

25. Vorrichtung nach einem der Ansprüche 19 bis 24, dadurch gekennzeichnet, daß sie eine Einrichtung zum Flammbürsten der Polymerfolie (1) vor dem Aufbringen der Folie aus Dichtungsmittel auf derselben und/oder eine Einrichtung zum nochmaligen Erwärmen der mit Dichtungsmittel beschichteten Folie enthält.

26. Vorrichtung nach einem der Ansprüche 19 bis 25, dadurch gekennzeichnet, daß die Polymerfolie (1) etwa parallele Bereiche an oder in der Nähe der gegenüberliegenden Ränder hat, und daß die Einrichtung zum Halten Greifeinrichtungen aufweist, die diese Bereiche ergreifen.

27. Vorrichtung nach Anspruch 26, dadurch gekennzeichnet, daß zusätzlich ein Paar von zweiten Greifeinrichtungen vorgesehen ist, die in einer Richtung etwa senkrecht zu jener der zuerst erwähnten Greifeinrichtungen wirken, und die ein Zackigwerden des Randes verhindern oder reduzieren, das sich aus der Spannung in der Polymerfolie durch die zuerst angegebenen Greifeinrichtungen ergeben könnte.

28. Vorrichtung zur Dichtungsmittelbeschichtung einer wärmeerholbaren Polymerfolie (1) mit einer massiven Folie (5) aus wärmeaktivierbarem Dichtungsmittel, gekennzeichnet durch:

(a) einen Träger (14) für die Polymerfolie (1), der ein Greifsystem hat, das die Polymerfolie in einer etwa gleichförmigen Konfiguration auf dem Träger halten kann;

(b) eine Heizzone (3), die die Polymerfolie (1) auf eine Temperatur erwärmen kann, die zur Aktivierung des Dichtungsmittels beim Kontakt mit der Polymerfolie ausreicht;

(c) eine Flammbürstzone (4); und

(d) eine Walze (6) zum Pressen der Folie (5) aus Dichtungsmittel auf die Oberfläche der erwärmten Polymerfolie (1);

die Vorrichtung ist derart ausgelegt, daß der Träger (14) sequentiell durch die Heizzone (3), die Bürstzone (4) und an der Walze (6) vorbeibewegt werden kann.

29. Vorrichtung nach Anspruch 28, dadurch gekennzeichnet, daß das Greifsystem erste Greifeinrichtungen aufweist, die die Polymerfolie etwa gleichförmig in einer Richtung halten, und zweite Greifeinrichtungen aufweist, die ein Zackigwerden der gegenüberliegenden Enden der Folie verhindern können, das sich aus der Spannung in der Folie in dieser einen Richtung ergeben könnte.

**Revendications**

1. Procédé d'enduction avec un obturant d'une feuille en polymère à reprise thermique (1), consistant à chauffer la feuille à une température élevée et à appliquer une feuille solide (5) d'un obturant activable par la chaleur sur la feuille de polymère chauffée (1), pendant que cette feuille de polymère est à une température capable d'activer l'obturant pour le faire adhérer à la feuille de polymère.

2. Procédé selon la revendication 1, dans lequel on enduit individuellement avec l'obturant des feuilles séparées de polymère à reprise thermique.

3. Procédé selon la revendication 1 ou 2, dans lequel on applique la feuille d'obturant (5) au moyen d'un rouleau (6).

4. Procédé selon la revendication 3, dans lequel le rouleau (6) se déplace transversalement par rapport à la surface de la feuille de polymère fixe (1) pour effectuer l'enduction.

5. Procédé selon la revendication 3 ou 4, dans lequel on enroule le bord avant de la feuille d'obturant (5) autour du rouleau (6), de façon que sa partie arrière et sa partie en contact avec la feuille de polymère (1) se déplacent sensiblement à contre-courant l'une par rapport à l'autre pendant l'application de la feuille d'obturant (5) sur la feuille de polymère (1).

6. Procédé selon la revendication 3, 4 ou 5, dans lequel le rouleau (6) comporte des moyens libérables pour retenir sur lui la feuille d'obturant (5), de façon qu'au moins la portion avant de la feuille d'obturant soit ainsi retenue avant son contact avec la feuille de polymère.

7. Procédé selon la revendication 6, dans lequel les moyens de retenue sont libérés lors du contact du bord avant de la feuille d'obturant (5) avec la feuille de polymère.

8. Procédé selon la revendication 6 ou 7, dans lequel les moyens de retenue sont actionnés par le vide.

9. Procédé selon la revendication 8, dans lequel les moyens de retenue comprennent un ou plusieurs trous (11, 12) dans le rouleau (6), de sorte qu'on applique le vide pour maintenir la feuille d'obturant (5).

10. Procédé selon l'une quelconque des revendications 3 à 9, dans lequel le rouleau (6) présente une surface élastique.

11. Procédé selon la revendication 10, dans lequel la surface élastique est formée par une couche de mousse polymère (13) autour de la surface du rouleau (6).

12. Procédé selon l'une quelconque des revendications précédentes, dans lequel la feuille de polymère (1) est brossée à la flamme avant l'application sur elle de la feuille d'obturant (5).

13. Procédé selon l'une quelconque des revendications précédentes, dans lequel on réchauffe la feuille de polymère enduite d'obturant après l'application de l'obturant.

14. Procédé selon l'une quelconque des revendications précédentes, dans lequel la feuille de polymère est déplacée sur un support (14) de la feuille de polymère pour l'amener successivement sous au moins deux des moyens suivants: moyens pour effectuer le chauffage (3), moyens de brossage à la flamme (4), moyens de réchauffage, moyens de refroidissement.

15. Procédé selon l'une quelconque des revendications précédentes, dans lequel la feuille de polymère (1) présente des régions sensiblement parallèles, sur ou à côté de ses bords opposés, et est tenue, pendant le chauffage et l'application, par des moyens de préhension qui serrent lesdites régions.

16. Procédé selon l'une quelconque des revendications précédentes, qui consiste en outre à refroidir la feuille de polymère enduite progressivement à partir des bords vers son centre.

17. Procédé selon l'une quelconque des revendications précédentes, dans lequel on effectue l'enduction lorsque la température de la feuille de polymère est au-dessus du point de fusion cristallin du polymère.

18. Procédé selon l'une quelconque des revendications précédentes, dans lequel l'obturant activable par la chaleur est un adhésif qui fond à la chaleur, ou un mastic qui est sensiblement solide avant le chauffage.

19. Appareil pour enduction avec un obturant d'une feuille de polymère à reprise thermique (1), comprenant des moyens de support (14 et des moyens de chauffage (3) de la feuille, et des moyens (6) pour appliquer une feuille solide d'un obturant (5) activable par la chaleur sur la feuille de polymère (1) qui a été chaffée par les moyens de chauffage, à une température capable d'activer l'obturant pour le faire adhérer à la feuille de polymère.

20. Appareil selon la revendication 19, dans lequel les moyens d'application comprennent un rouleau (6) pour appliquer la feuille d'obturant (5) contre la surface de la feuille de polymère.

21. Appareil selon la revendication 20, dans lequel le rouleau (6) est muni de moyens libérables pour retenir la feuille d'obturant sur lui.

22. Appareil selon la revendication 21, dans lequel les moyens de retenue sont actionnés par le vide.

23. Appareil selon la revendication 22, dans lequel les moyens de retenue comprennent au moins un trou (11, 12) dans la surface du rouleau (6), de sorte qu'un vide peut être appliqué pour tenir la feuille d'obturant (5) sur le rouleau (6).

24. Appareil selon la revendication 21, 22 ou 23, comportant des moyens pour relâcher automatiquement les moyens de retenue, afin de libérer la feuille d'obturant (5) du rouleau (6), lors du contact de la feuille d'obturant avec la feuille de polymère chaude (1).

25. Appareil selon l'une quelconque des revendications 19 à 24, qui comprend des moyens de brossage à la flamme de la feuille de polymère (1) avant l'application de la feuille d'obturant et/ou des moyens pour réchauffer la feuille enduite d'obturant.

26. Appareil selon l'une quelconque des revendications 19 à 25, dans lequel la feuille de polymère (1) présente des régions sensiblement parallèles, sur ou près des bords opposés, et les moyens de support comprennent des moyens de préhension qui serrent lesdites régions.

27. Appareil selon la revendication 26, qui comprend en outre une paire de seconds moyens de préhension qui agissent dans un sens sensiblement perpendiculaire à celui des moyens mentionnés en premier lieu, et qui empêchent ou réduisent les échancrures pouvant être formées par suite de la tension créée transversalement dans la feuille de polymère par lesdits moyens mentionnés en premier lieu.

28. Appareil pour enduire d'un obturant une feuille de polymère à reprise thermique (1) avec une feuille solide d'obturant activable par la chaleur (5), qui comprend:

a) un support (14) pour la feuille de polymère (1) ayant un système de retenue qui peut tenir la feuille de polymère selon une configuration sensiblement régulière sur le support;

b) une zone de chauffage (3) qui peut chauffer la feuille de polymère (1), à une température suffisante pour que l'activant soit activé lors du contact avec la feuille de polymère;

c) une zone de brossage à la flamme (4); et

d) un rouleau (6) pour appliquer la feuille d'obturant (5) contre la surface de la feuille chauffée (1) de polymère,

l'appareil étant agencé de manière que le support (14) puisse passer successivement par la zone de chauffage (3), la zone de brossage (4) et au-delà du rouleau (6).

29. Appareil selon la revendication 28, dans lequel le système de retenue comprend des premiers moyens de préhension pouvant tenir la feuille de polymère dans un état sensiblement régulier dans une direction, et des seconds moyens de préhension qui peuvent éviter les éventuelles échancrures aux extrémités opposées de la feuille en raison de la tension exercée dans la feuille dans ladite première direction.

0 078 160

Fig.1.

Fig.2.

Fig.3.

Fig.4.

Fig.5.

Fig.6.

1

Fig.7.

Fig.8.

Fig.9.

Fig.10.

0 078 160

Fig.11.

0 078 160

Fig. 12.

Fig. 13.

Fig. 14.